# FASCICULE DE BREVET EUROPEEN

(11) **EP 1 611 934 B1**
(45) Date de publication et mention de la délivrance du brevet: **31.10.2007**
(21) Numéro de dépôt: 05291325.8
(22) Date de dépôt: 21.06.2005
(51) Int. Cl.: B01D 35/143, B01D 27/07, F01M 11/03, F01M 11/10

(54) **Filtre à fluide muni d'un capteur**
Fluidfilter mit Sensor
Fluid filter with sensor

(30) Priorité: 28.06.2004 FR 0407078
(43) Date de publication de la demande: 04.01.2006
(73) Titulaire: FILTRAUTO, 78286 Guyancourt Cedex (FR)
(72) Inventeur: Regnard, Benoît, 78370 Plaisir (FR); Brisson, Marc, 93350 Le Bourget (FR)
(74) Mandataire: Burbaud, Eric

(56) Documents cités:
- EP-A- 1 369 566
- DE-A- 10 224 478
- US-A- 2 879 892
- US-A- 4 470 301
- US-A1- 2004 003 851
- US-B1- 6 168 713
- US-B1- 6 206 035

## Description

La présente invention se rapporte à un filtre à fluide pour véhicules, et plus particulièrement à un filtre comprenant :
- un corps au moins en partie en matière plastique et présentant une base de fixation, ladite base de fixation présentant une première face destinée à venir en contact avec un organe du véhicule relié à la masse, une deuxième face sensiblement opposée à la première face et au moins un passage traversant destiné à être traversé par un élément métallique de fixation du filtre à l'organe du véhicule ; et
- un capteur électrique destiné à mesurer un paramètre de fonctionnement du filtre et présentant un organe de fixation au moins en partie métallique.

Récemment, sont apparus des filtres pour véhicules automobiles, et notamment des filtres à huile, dont le corps est réalisé en matière plastique. Ce type de filtre présente l'avantage d'un poids et d'un coût de fabrication inférieurs aux filtres antérieurs dont le corps est métallique.

Toutefois, les corps de filtres en matière plastique présentent des inconvénients pour le montage d'un capteur électrique, notamment pour les capteurs couramment utilisés pour mesurer la pression ou la température d'huile. En effet, ces capteurs comprennent généralement un organe de fixation métallique, telle qu'une portion filetée terminée par une collerette, qui est relié à la masse du véhicule par l'intermédiaire de la base métallique du filtre et qui est relié électriquement à l'élément de mesure du capteur, par exemple pour fournir un potentiel de référence. Ces capteurs comprennent d'autre part une cosse de connexion électrique unique par laquelle un signal électrique représentatif de la valeur mesurée est transmis à un dispositif de contrôle du véhicule via un fil conducteur unique. Mais dans le cas où le capteur est monté sur une portion plastique du filtre ou dans le cas d'une base en matière plastique, il est nécessaire de relier le capteur à la masse à l'aide d'une connexion électrique supplémentaire, ce qui demande des opérations de montage supplémentaire et peut être délicat à réaliser du fait de l'absence de cosses de mise à la masse sur les capteurs standards. Par conséquent, le coût du montage du capteur est augmenté et la fiabilité de la mesure peur être diminuée si le montage n'est pas soigneusement réalisé.

La présente invention a donc pour but de résoudre le problème lié à la mise à la masse d'un capteur électrique sur un corps de filtre au moins en partie en matière plastique, en proposant une solution qui soit compatible avec les capteurs électriques standards et garantissant une grande fiabilité de fonctionnement du capteur.

A cet effet, la présente invention a pour objet un filtre à fluide du type précité, caractérisé en ce qu'il comporte :
- un élément métallique disposé en regard de la deuxième face de la base de fixation et présentant au moins un trou agencé en correspondance avec le passage traversant, ledit trou présentant un pourtour contre lequel est destiné à venir en appui l'élément de fixation du filtre ; et
- un organe de retenue adapté pour coopérer avec l'organe de fixation du capteur et adapté pour relier électriquement l'élément métallique avec le capteur.

Ainsi, l'élément métallique assure, par l'intermédiaire de l'élément de fixation du filtre et de l'organe de retenue du capteur, la continuité électrique entre l'organe du véhicule et le capteur, qui peut alors être un capteur de type standard.

D'autre part, la continuité électrique est assurée dès lors que le capteur est correctement monté sur le filtre et que le filtre est fixé à l'organe du véhicule à l'aide du ou des éléments de fixation métalliques, sans opération de connexion à l'aide de fils électriques supplémentaires.

Par ailleurs, le fait que la base en plastique du filtre soit enserrée entre l'organe du véhicule et l'élément métallique permet de répartir les contraintes créées dans celle-ci par le ou les éléments de fixation, et ce d'autant plus si l'élément métallique et la base présentent respectivement une pluralité de passages traversants et de trous répartis sur la deuxième face.

Dans des modes de réalisation préférés de l'invention on a recours, en outre, à l'une et/ou à l'autre des dispositions suivantes :
- le corps du filtre présente un logement à l'intérieur duquel est agencé un insert métallique adapté pour coopérer avec l'organe de fixation du capteur, ledit insert formant au moins une partie de l'organe de retenue, et l'élément métallique présente une fenêtre agencée en regard du logement, qui est adaptée pour être traversée par au moins une partie de l'organe de fixation du capteur, de sorte qu'un capteur destiné à être fixé à une pièce en métal peut être monté sur le filtre sans risque d'endommager le corps en matière plastique ;
- l'organe de fixation comprend un filetage s'étendant depuis une extrémité du capteur jusqu'à une collerette, l'insert présentant un taraudage complémentaire et étant immobilisé en rotation dans le logement ;
- l'insert est monté coulissant dans le logement selon une direction sensiblement perpendiculaire à la fenêtre de l'élément métallique et présente une face extérieure adaptée pour venir en appui contre le pourtour de ladite fenêtre lors de la coopération de l'organe de fixation du capteur avec ledit insert, ainsi l'élément métallique est enserré entre l'insert et le capteur lors du montage, ce qui assure un contact électrique fiable ;
- l'insert métallique est immobilisé dans le logement et présente une face extérieure faisant saillie à la surface du corps du filtre, qui est adaptée pour venir en appui contre le pourtour de la fenêtre, ce qui évite la génération de contraintes de compression dans le corps en plastique lors du montage du capteur ;
- la face extérieure de l'insert présente une projection adaptée pour s'insérer dans la fenêtre et présentant une hauteur au plus égale à l'épaisseur de l'élément métallique, cette projection permettant ainsi de positionner l'élément métallique par rapport au corps ;
- l'élément métallique est une plaque, de préférence en aluminium ;
- le corps du filtre présente des ergots de positionnement et l'élément métallique comporte des ouvertures adaptées pour entourer les ergots de positionnement ;
- un joint d'étanchéité est disposé entre l'insert métallique et le logement du corps ;
- un joint d'étanchéité est disposé autour du logement entre le corps du filtre et l'élément métallique ;
- un conduit assure une communication entre un circuit de fluide et le logement du corps, le capteur présentant une zone sensible à la caractéristique mesurée, qui est agencée dans le logement ;
- le conduit est défini d'une part par une portion du logement débouchant dans la surface extérieure du corps, et d'autre part, par l'élément métallique ;
- le fluide filtré est de l'huile de lubrification et le capteur est un capteur de pression ;
- un échangeur thermique destiné à refroidir l'huile est fixé sur l'élément métallique, ainsi les contraintes mécaniques générées par les vibrations et l'inertie de l'échangeur thermique sont transmises principalement à l'élément métallique.

D'autres caractéristiques et avantages de l'invention apparaîtront au cours de la description qui va suivre, donnée à titre d'exemples non limitatifs, en référence aux dessins annexés dans lesquels :
- la figure 1 est une vue en perspective d'un filtre muni d'un capteur selon l'invention et destiné à être monté sur un organe de véhicule ;
- la figure 2 est une vue de dessous partiellement arrachée du filtre représenté à la figure 1 ;
- la figure 3 est une vue de face simplifiée du filtre représenté à la figure 1 ;
- la figure 4 est une vue schématique en coupe éclatée selon la ligne IV-IV de la figure 3 ;
- la figure 5 est une vue analogue à la figure 4 dans laquelle le capteur est monté sur le filtre et le filtre est monté sur l'organe du véhicule ;
- la figure 6 est une vue analogue à la figure 5 représentant un deuxième mode de réalisation ;
- la figure 7 est une vue réduite analogue à la figure 5 représentant un troisième mode de réalisation
- la figure 8 est une partielle de face représentant de manière simplifiée le troisième mode de réalisation, dans laquelle une partie des éléments du filtre ont été retirés.

Sur les différentes figures, on a conservé des références identiques pour désigner des éléments identiques ou similaires.

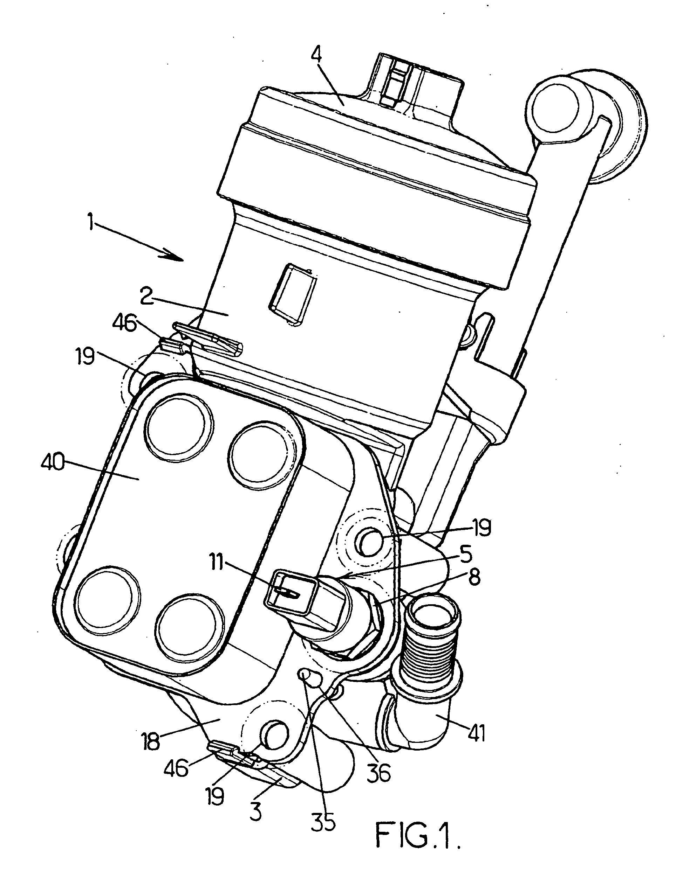

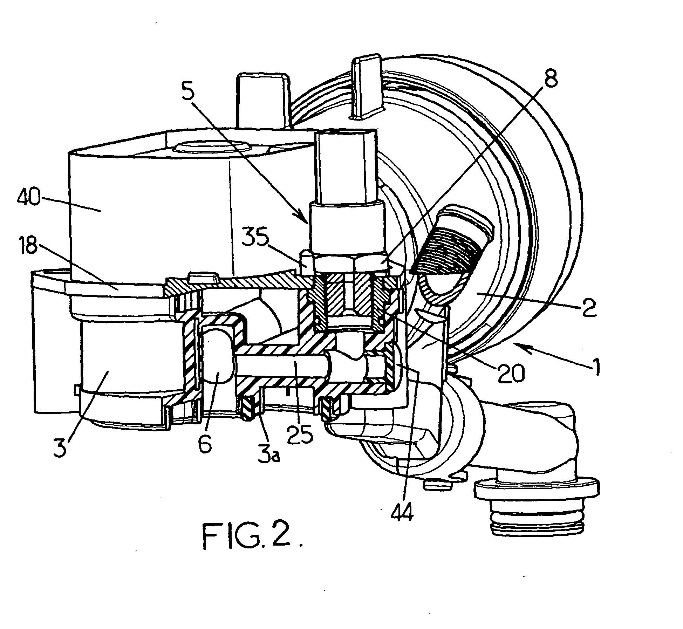

Le filtre 1 représenté à la figure 1 comprend un corps 2 qui comporte une base de fixation 3 solidaire de celui-ci. Le corps 2 définit une cuve sensiblement cylindrique, fermée par un couvercle 4, dans laquelle est placé un élément filtrant. De manière connue, le filtre comprend des conduits 6 visibles à la figure 2 , s'étendant dans la base 3 et le corps 2, qui définissent un circuit de fluide traversant l'élément filtrant.

Dans le mode de réalisation représenté, le fluide filtré est de l'huile de lubrification d'un moteur à combustion interne. Mais comme il apparaîtra par la suite, la présente invention est applicable à d'autres types de filtres et notamment à des filtres à carburant et des filtres à air, qu'il s'agisse de l'air d'admission d'un moteur ou de l'air destiné à l'habitacle d'un véhicule.

Le corps 2 et la base fixation 3 sont en matière plastique, et plus précisément en nylon PA 6.6 moulé en une seule pièce par injection.

Le filtre comprend en outre un capteur 5 de type connu et identique à ceux couramment montés sur les filtres à huiles présentant un corps en métal.

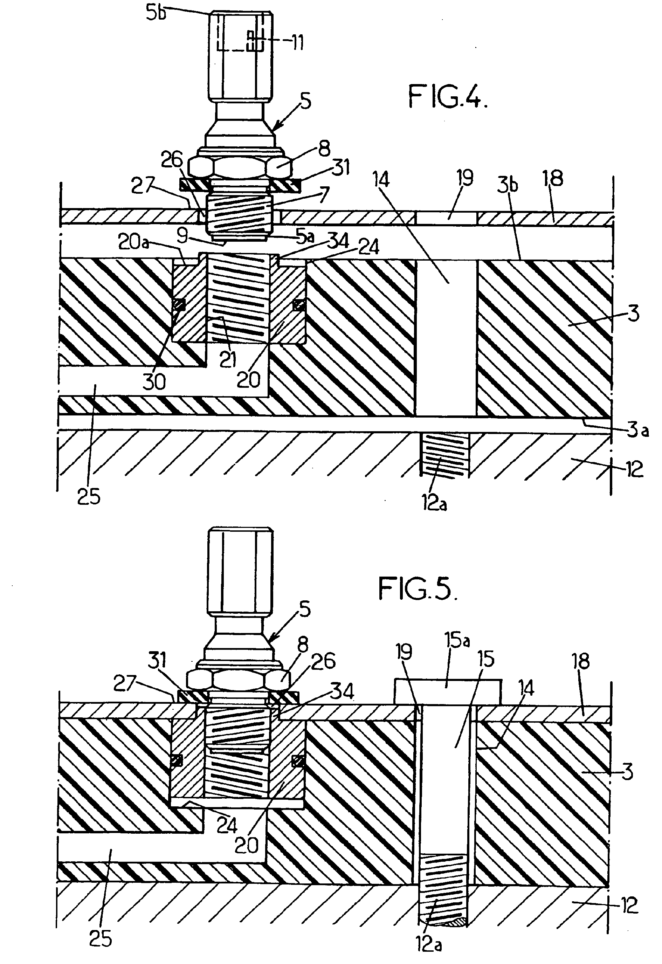

Le capteur 5 comporte un organe de fixation qui permet d'assurer son maintien sur le filtre. Dans le mode de réalisation représenté et comme on le voit mieux à la figure 4, l'organe de fixation comprend une portion filetée 7 s'étendant depuis une extrémité 5a du capteur et une collerette 8 agencée à proximité de la portion filetée 7, qui vient en butée lors du vissage du capteur 5 pour le bloquer. La collerette 8 présente une forme hexagonale pour être serrée à l'aide d'une clé. Toutefois, il est envisageable que l'organe de fixation du capteur soit sensiblement différent et même qu'il soit fixé au filtre autrement que par vissage, par exemple à l'aide de moyens d'encliquetage.

L'organe de fixation, à savoir la portion filetée 7 et la collerette 8, sont métalliques. Mais seule une partie de cet organe, par exemple la portion filetée 7, pourrait être métallique.

Le capteur 5 présente en outre une zone 9 sensible à la grandeur caractéristique à mesurer qui est agencée à l'extrémité libre 5a du capteur et concentrique à la portion filetée 7. La zone sensible 9 est en contact avec un dispositif électrique plus ou moins complexe adapté pour fournir un signal électrique représentatif de la valeur mesurée. Le dispositif électrique est relié à l'organe de fixation (7, 8) qui fournit un potentiel de référence grâce à une connexion, détaillée ci-après, à la masse du véhicule. Le dispositif de mesure est également relié à une cosse de connexion électrique 11 agencée dans un puits formé à l'extrémité 5b du capteur qui est opposé à la portion filetée 7. Le signal électrique fourni par le capteur 5 est transmis, via la cosse 11 et un fil conducteur non représenté, à un dispositif de contrôle du véhicule.

Dans le mode de réalisation représenté, le capteur 5 est un manocontact de pression d'huile qui fournit un signal électrique représentatif de la pression d'huile. Toutefois, le capteur pourrait simplement établir un contact entre la masse et la cosse 11 lorsque la pression d'huile est supérieure à une valeur déterminée. Bien entendu, il pourrait s'agir d'un autre type de capteur et notamment d'un capteur de température.

La base de fixation 3 du filtre présente une première face 3a, mieux visible sur la figure 4, qui est adaptée pour être pressée contre l'organe du véhicule 12, c'est-à-dire le bloc moteur dans le mode de réalisation représenté, auquel doit être fixé le filtre. La portion du bloc moteur 12 à laquelle est fixé le filtre, et la première face 3a sont globalement planes, mais ces faces pourraient présenter une conformation plus complexe.

La base 3 présente une deuxième face 3b qui est plane et parallèle à la première face 3a, mais qui pourrait être aussi de forme plus complexe ou inclinée par rapport à la première face 3a.

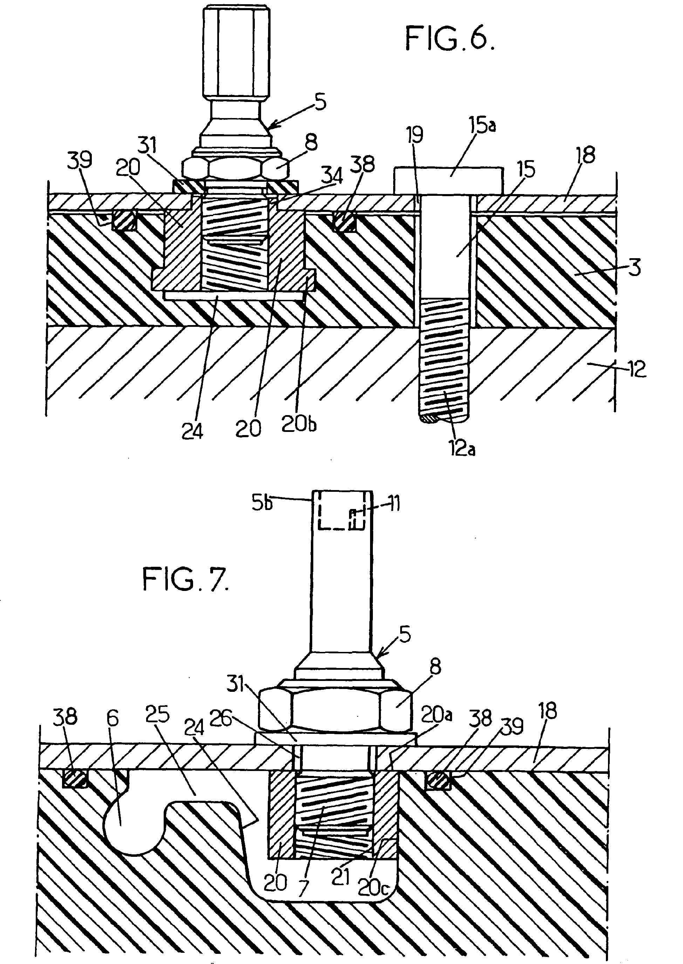

La base 3 est traversée par des passages 14 débouchant perpendiculairement aux première et deuxième faces (3, 3b). Chaque passage 14 est destiné à recevoir un élément de fixation métallique, telle qu'une vis 15 représentée à la figure 5, ou un goujon. Les passages 14 présentent une paroi cylindrique lisse de diamètre sensiblement supérieur aux vis 15 de manière à éviter tout frottement ou contrainte entre la matière plastique et les vis 15. Les passages 14, au nombre de quatre dans le mode de réalisation représenté, sont répartis sur la première face 3a de la base, et plus particulièrement répartis de manière régulière sur la périphérie de la base 3, de manière à venir en correspondance avec des puits taraudés 12a formés dans le bloc moteur 12.

De plus, le filtre 1 comprend un élément métallique 18 adapté pour venir contre la deuxième face 3b de la base 3. L'élément métallique 18 présente des trous 19 agencés en correspondance avec chacun des passages 14 et présentant un diamètre adapté pour que la tête des vis de fixation vienne en appui contre le pourtour de ces trous 19. Dans le mode de réalisation représenté, l'élément métallique 18 se présente sous la forme d'une plaque d'aluminium couvrant sensiblement toute la deuxième face 3b de la base, mais il pourrait s'agir d'un élément de forme plus complexe, recouvrant partiellement la deuxième face 3b de la base et/ou s'étendant également contre une autre partie du corps 2 du filtre. L'élément métallique pourrait également être formé de plusieurs pièces assemblées. Par exemple le capteur pourrait être monté sur un échangeur de chaleur 40 visible aux figures 1 à 3, et plus particulièrement sur la face supérieure de celui-ci. Dans ce cas l'élément métallique est constitué par l'ensemble formé de l'échangeur 40 et de la plaque 18 qui sont assemblé par soudage.

Le filtre 1 comprend en outre un organe de retenue 20 qui présente une portion taraudée 21 adaptée pour coopérer avec la portion 7 de l'organe de fixation du capteur et assurer un contact électrique entre le capteur 5 et l'élément métallique 18 comme cela sera détaillé ci-après.

Dans les différents modes de réalisation représentés, l'organe de retenue 20 se présente sous forme d'un insert métallique traversé par la portion taraudée 21. L'insert métallique 20 est agencé dans un logement 24 formé dans le corps du filtre en matière plastique, et plus précisément dans le mode de réalisation représenté, un logement 24 débouchant dans la deuxième face 3b de la base. On notera que le logement 24 pourrait être formé dans une autre partie du corps 2 que la base 3, à condition que l'élément métallique 18 s'étende jusqu'à cette partie du corps. L'insert présente une face extérieure 20a accessible par le débouché du logement 24.

Un conduit 25 assure une communication fluidique entre le logement 24 et le circuit d'huile 6 du filtre, de manière à ce que la pression qui règne dans le logement soit identique à celle d'une partie du circuit d'huile.

L'élément métallique 18 présente une fenêtre 26 de forme adaptée pour être traversée par la portion filetée 7 de l'organe de fixation du capteur 5. Toutefois, les dimensions de cette fenêtre sont inférieures à celles de la face extérieure 20a de l'insert et inférieures à celles de la collerette 8 du capteur, de sorte que lors du serrage du capteur 5, la collerette 8 et l'insert 20 enserrent le pourtour 27 de la fenêtre 26.

Dans le mode de réalisation représenté aux figures 4 et 5, l'insert 20 est monté coulissant dans le logement 24 selon une direction sensiblement perpendiculaire à la deuxième face 3b de la base 3, ou encore sensiblement perpendiculaire au plan moyen de la fenêtre 26. Sous l'effet du serrage du capteur 5, la face extérieure 20a de l'insert vient affleurer au niveau de la face 3b et est en contact contre l'élément métallique 18 qui est lui même maintenu contre cette face par la vis de fixation 15, et ce sans créer de contraintes importantes dans la matière plastique de la base 3.

Pour garantir l'étanchéité entre l'insert 20 et la paroi du logement 24, un joint torique 30, agencé dans une gorge annulaire de l'insert 20, est comprimé entre ces deux éléments.

Dans le même but, une rondelle d'étanchéité 31, de préférence de type bague BS conductrice, est prévue entre la collerette 8 du capteur et le pourtour 27 de la fenêtre 26. Ainsi, les éventuelles remontées d'huile qui pourraient passer entre les filets du capteur 5 et de l'insert 20 sont stoppées.

La face extérieure 20a de l'insert comporte une projection annulaire saillante 34, agencée concentriquement à la portion taraudée 7 et de diamètre extérieur légèrement inférieur à la fenêtre circulaire 26. La projection 34 s'insère dans la fenêtre 26, afin de positionner l'élément métallique 18 et d'éviter toute translation de celui-ci par rapport à la deuxième face 3b de la base.

La hauteur de la projection 34 est inférieure à l'épaisseur de la plaque formant l'élément métallique 18, de manière à ne pas venir interférer avec la collerette 8 et/ou la rondelle d'étanchéité 31 lors du serrage du capteur 5, évitant ainsi la possibilité d'un jeu entre le pourtour 27 de la fenêtre et l'ensemble formé par l'insert 20 et le capteur 5.

La hauteur de la projection 34 peut toutefois être avantageusement adaptée pour que l'extrémité de la projection 34 vienne en appui étanche contre la rondelle d'étanchéité 31, de manière à stopper les éventuelles remontées de fluide par le filetage du capteur.

Comme on peut le voir sur la figure 4, la profondeur du logement 24 est adaptée pour que la face extérieure 20a de l'insert soit légèrement en retrait de la deuxième face 3b de la base, afin de minimiser les contraintes de la matière plastique lors du montage. La profondeur du logement 24 est aussi adaptée, c'est à dire suffisamment peu profonde, pour que la projection 34 de l'insert face saillie à la deuxième face 3b. Ainsi, la projection 34 remplit son rôle de positionnement, même lorsque l'insert 20 est repoussé au fond du logement 24.

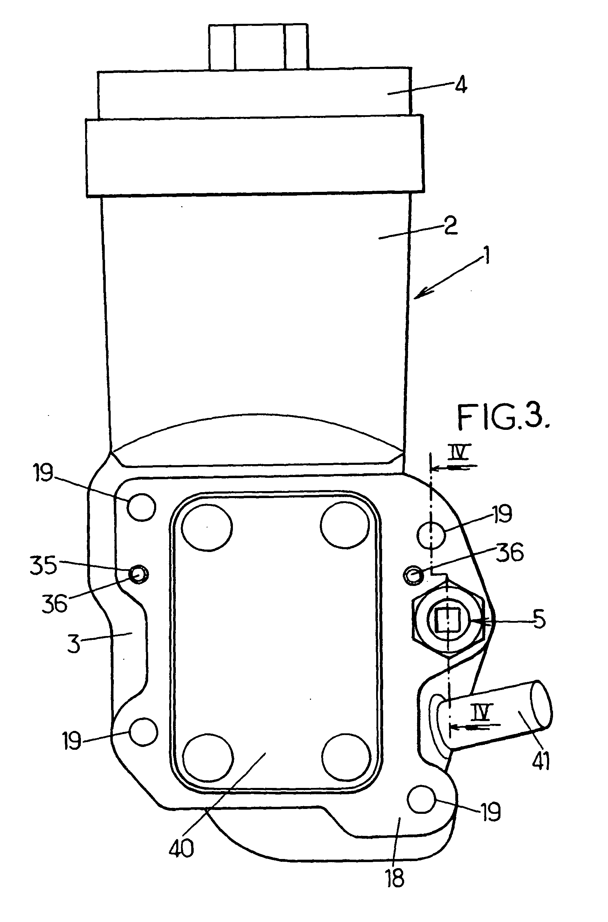

Egalement dans le but de positionner l'élément métallique 18 correctement par rapport à la base 3 et d'assurer son immobilisation par rapport à celle-ci, la deuxième face 3b de la base comporte des ergots 35, visibles sur la figure 3, qui pénètrent dans des ouvertures complémentaires 36 formées dans l'élément métallique 18.

Dans le deuxième mode de réalisation, représenté à la figure 6, l'insert métallique 20 est immobilisé dans le logement 24. Cette immobilisation peut être réalisée par un surmoulage de la base 3 autour de l'insert métallique 20 et améliorée par la présence d'un épaulement radialement extérieur 20b de l'insert, qui s'étend dans la base 3. Dans ce mode de réalisation, l'insert est immobilisé de manière à ce que sa face supérieure 20a fasse légèrement saillie à la deuxième face 3b de la base.

Cette disposition limite les contraintes qui pourraient être crées dans la matière plastique lors du serrage du capteur. En effet, si la face extérieure 20a de l'insert était agencée légèrement à l'intérieur du puits formé par le logement, le serrage du capteur 5 créerait des contraintes de compression dans la matière plastique située entre le pourtour 27 de la fenêtre de l'élément métallique 18 et l'épaulement 20b de l'insert, contraintes qui pourraient éventuellement provoquer des fissures dans la base et par conséquent des fuites de fluide. Bien entendu, le serrage des vis de fixation 15 peut également entraîner des contraintes de compression élevée dans la base, mais ces contraintes peuvent être réparties plus uniformément grâce à l'élément métallique 18. De plus, les contraintes crées par les vis 15 sont localisées dans une région du filtre où la présence d'éventuelles microfissures n'entraînerait pas une fuite de fluide.

On notera également dans le mode de réalisation représenté à la figures 6, la présence d'un joint 38 disposé dans une gorge 39 formée dans la deuxième face 3b de la base et entourant le logement 24. Le joint 38 est comprimé entre la base 3 et l'élément métallique 18 de manière à stopper les éventuelles fuites de fluide entre l'insert 20 et son logement 24, ou entre l'insert 20, et l'élément métallique 18.

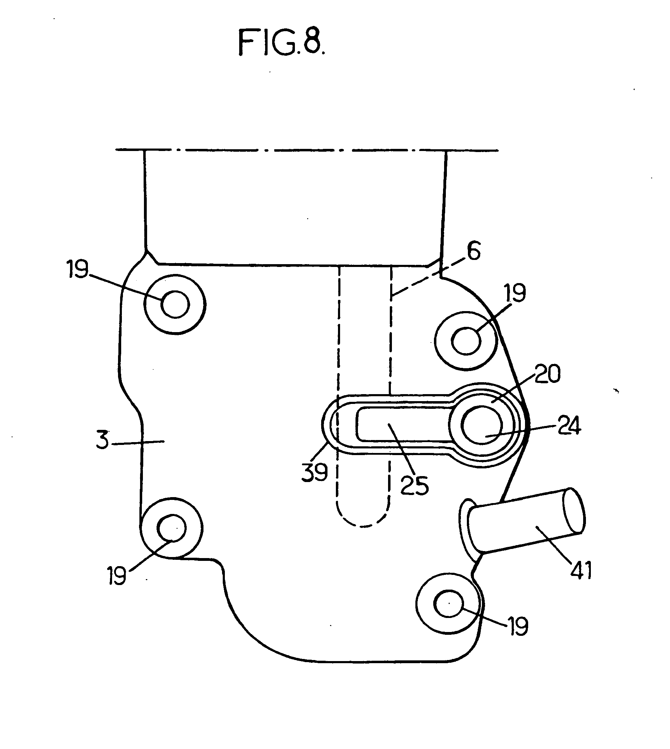

Dans le mode de réalisation représenté aux figures 7 et 8, le logement 24 présente une forme plus complexe qui s'étend au-delà de l'insert 20 et débouche dans la deuxième face 3b de la base. Le logement 24 ainsi réalisé est entièrement entouré par un joint d'étanchéité 38 comprimé entre la plaque formant l'élément métallique 18 et la deuxième face 3b de la base, comme dans cela est visible à la figure 6. La gorge 39 et par conséquent le joint 38, présentent alors une forme plus complexe, visible sur la figure 8, de manière à entourer le débouché du logement 24.

Le logement 24, fermé par l'élément métallique 18 de manière étanche grâce au joint 38 et la rondelle d'étanchéité 31, définit non seulement un espace permettant de loger l'insert 20, mais également le conduit 25 assurant la communication avec le circuit de fluide 6 et formant éventuellement une partie de ce circuit de fluide.

Le conduit de fluide 25 peut être ainsi moulé directement par une coquille du moule servant à former la base 3 du filtre, sans avoir à recourir à un élément de moulage mobile, ce qui simplifie la fabrication du corps et de la base du filtre. En effet, dans ce cas il n'est pas nécessaire de prévoir un bouchon de trou de démoulage, tel que le bouchon 44 visible sur la figure 2.

On notera que dans le mode de réalisation représenté à la figure 7, l'insert métallique 20 est une simple douille taraudée, qui présente un méplat 20d venant en appui contre une portion du logement 24 afin d'immobiliser sa rotation lors du vissage du capteur. Toutefois, l'essentiel du couple de serrage exercé sur le capteur est transmis au pourtour 27 de la fenêtre de l'élément métallique 18, de sorte que le couple transmis par la portion filetée 7 à l'insert 20 est faible. Par conséquent, les contraintes dans la matière plastique, liées à l'immobilisation en rotation de l'insert 20, restent tout à fait acceptables et ne créent pas de fissures dans la paroi du logement 24.

Pour procéder au montage du filtre 1 sur un véhicule, on procède de la manière suivante : le capteur 5 est fixé au filtre par vissage de sa portion filetée 7 dans la portion taraudée 21 de l'insert 20, en disposant l'élément métallique 18 entre ces éléments. Cet assemblage assure une continuité électrique entre le capteur 5, et plus particulièrement entre l'organe de fixation (7, 8) de celui-ci, et l'élément métallique 18.

On notera que dans le cas où l'insert 20 est immobilisé dans son logement 24, cette fixation du capteur 5 solidarise le corps 2 du filtre, l'élément métallique 18 et le capteur dans un ensemble unitaire pré-assemblé. Un tel ensemble peut également être obtenu à l'aide d'organes de maintient, tels que les pattes élastiques 46 venues de matière avec le corps 2 et visibles sur la figure 1, qui coopèrent avec l'élément métallique 18. Toutefois, la présente invention n'exclut pas la possibilité de réaliser une fixation de l'élément 18 directement sur le corps en plastique à l'aide de moyens de fixation supplémentaires ou à l'aide d'un collage.

Du fait de la présence de la projection saillante 34 de l'insert et des ergots 35, l'élément 18 peut être immobilisé par rapport au filtre lorsque seul le capteur 5 est monté.

Ensuite, le filtre 1 muni de son capteur 5 est fixé au bloc moteur 12 du véhicule à l'aide des vis métalliques de fixation 15 qui passent à travers les trous 19 et les passages 14 pour venir en prise avec les portions taraudées 12a du bloc. Ainsi, la continuité électrique entre l'élément 18 et la masse électrique constituée par le bloc moteur 12, est assurée grâce au contact des têtes 15a des vis avec l'élément métallique 18, contact qui peut également être réalisé en disposant une rondelle métallique entre ces éléments.

Comme on peut le voir aux figures 1 et 2, le filtre comporte un échangeur thermique 40 qui se présente sous forme d'un boîtier et dans lequel circule de l'eau, notamment par une sortie d'eau 41, dans le but de refroidir l'huile de lubrification. Ce boîtier métallique 40, de préférence en aluminium, est fixé à l'élément métallique 18. Cette fixation entre deux pièces métalliques, qui sont de préférence de même nature, peut être réalisée par soudage.

La liaison entre l'échangeur thermique 40, qui peut présenter une masse relativement importante, et l'élément métallique 18, permet de transmettre les vibrations de l'échangeur thermique 40 à l'élément métallique 18. Les vibrations entraînant des déplacements globalement parallèles à la deuxième face 3b sont transmises au bloc moteur 12 par les vis 15, sans générer de contraintes dans la matière plastique. Celles entraînant des déplacements perpendiculaires sont transmises à l'élément 18 qui se présente sous forme d'une plaque couvrant de préférence la majeur partie de la deuxième face 3b, ce qui répartit les contraintes liées à ces vibrations dans une surface importante du corps du filtre de manière à ce qu'elles n'endommagent pas la matière plastique.

Bien entendu, les modes de réalisation décrits ci-dessus ne sont nullement limitatifs ; il est notamment possible de combiner entre elles les dispositions de ces différents modes de réalisation. D'autre part, on notera que l'organe de fixation du capteur 5 pourrait ne pas coopérer avec un insert métallique, mais coopérer directement avec l'élément métallique 18, élément 18 qui pourrait alors présenter une fenêtre circulaire taraudée ou un élément tubulaire rapporté, par exemple fixé par soudage, dans lequel la portion filetée 7 du capteur 5 serait vissée.

## Revendications

1. Filtre à fluide pour véhicules, comprenant :
- un corps (2) au moins en partie en matière plastique et présentant une base de fixation (3), ladite base de fixation présentant une première face (3a) destinée à venir en contact avec un organe (12) du véhicule relié à la masse, une deuxième face (3b) sensiblement opposée à la première face et au moins un passage traversant (14) destiné à être traversé par un élément métallique (15) de fixation du filtre à l'organe du véhicule ; et
- un capteur électrique (5) destiné à mesurer un paramètre de fonctionnement du filtre et présentant un organe de fixation (7, 8) au moins en partie métallique, **caractérisé en ce qu'**il comporte :
- un élément métallique (18) disposé en regard de la deuxième face (3b) de la base de fixation et présentant au moins un trou (19) agencé en correspondance avec le passage traversant, ledit trou (19) présentant un pourtour contre lequel est destiné à venir en appui l'élément de fixation (15) du filtre ; et
- un organe de retenue (20) adapté pour coopérer avec l'organe de fixation (7, 8) du capteur et adapté pour relier électriquement l'élément métallique (18) avec le capteur (5).

2. Filtre selon la revendication 1, dans lequel le corps (2) du filtre présente un logement (24) à l'intérieur duquel est agencé un insert métallique (20) adapté pour coopérer avec l'organe de fixation (7, 8) du capteur, ledit insert formant au moins une partie de l'organe de retenue, et dans lequel l'élément métallique (18) présente une fenêtre (26) agencée en regard du logement (24), qui est adaptée pour être traversée par au moins une partie (7) de l'organe de fixation du capteur.

3. Filtre selon la revendication 2, dans lequel l'organe de fixation comprend un filetage (7) s'étendant depuis une extrémité (5a) du capteur jusqu'à une collerette (8), l'insert (20) présentant un taraudage (21) complémentaire et étant immobilisé en rotation dans le logement (24).

4. Filtre selon la revendication 2 ou 3, dans lequel l'insert (20) est monté coulissant dans le logement (24) selon une direction sensiblement perpendiculaire à la fenêtre (26) de l'élément métallique et présente une face extérieure (20a) adaptée pour venir en appui contre le pourtour de ladite fenêtre (26) lors de la coopération de l'organe de fixation du capteur (5) avec ledit insert (20).

5. Filtre selon la revendication 2 ou 3, dans lequel l'insert métallique (20) est immobilisé dans le logement (24) et présente une face extérieure (20a) faisant saillie à la surface du corps (2) du filtre, qui est adaptée pour venir en appui contre le pourtour de la fenêtre (26).

6. Filtre selon l'un quelconque des revendications 2 à 5, dans lequel l'insert (20) présente une face extérieure qui comporte une projection (34) adaptée pour s'insérer dans la fenêtre (26) et présentant une hauteur au plus égale à l'épaisseur de l'élément métallique (18).

7. Filtre selon l'un quelconque des revendications précédentes, dans lequel l'élément métallique (18) est une plaque, de préférence en aluminium.

8. Filtre selon l'un quelconque des revendications précédentes, dans lequel le corps (2) du filtre présente des ergots de positionnement (35), et dans lequel l'élément métallique (18) comporte des ouvertures (36) adaptées pour entourer les ergots de positionnement.

9. Filtre selon l'un quelconque des revendications précédentes, dans lequel un joint d'étanchéité (30) est disposé entre l'insert (20) et le logement (24) du corps.

10. Filtre selon l'un quelconque des revendications précédentes, dans lequel un joint d'étanchéité (38) est disposé autour du logement (24) entre le corps (2) du filtre et l'élément métallique (18).

11. Filtre selon l'un quelconque des revendications 2 à 10, dans lequel un conduit (25) assure une communication entre un circuit de fluide (6) et le logement (24) du corps, le capteur (5) présentant une zone (9) sensible à la caractéristique mesurée, qui est agencée dans le logement.

12. Filtre selon la revendication 11, dans lequel le conduit (25) est défini d'une part par une portion du logement (24) débouchant dans la surface extérieure du corps (2), et d'autre part, par l'élément métallique (18).

13. Filtre selon l'un quelconque des revendications précédentes, dans lequel le fluide filtré est de l'huile de lubrification et le capteur (5) est un capteur de pression.

14. Filtre selon l'un quelconque des revendications précédentes, dans lequel un échangeur thermique (40) destiné à refroidir le fluide est fixé sur l'élément métallique (18).

## Claims

1. Fluid filter for vehicles, comprising:
- a body (2) made at least partially from plastic material and having a mounting base (3), said mounting base having a first face (3a) intended to come into contact with an element (12) of the vehicle linked to the body, a second face (3b) substantially opposite the first face and at least one continuous passage (14) through which a metal fixing element (15) of the filter extends as far as the element of the vehicle; and
- an electric sensor (5) designed to measure an operating parameter of the filter and having a fixing element (7, 8) made at least partially from metal, **characterised in that** it comprises:
- a metal element (18) disposed facing the second face (3b) of the mounting base and having at least one orifice (19) disposed congruently with the continuous passage, said orifice (19) having a periphery against which the fixing element (15) of the filter is designed to be supported; and
- a retaining element (20) adapted so as to co-operate with the fixing element (7, 8) of the sensor and adapted to provide an electrical connection between the metal element (18) and the sensor (5).

2. Filter as claimed in claim 1, in which the body (2) of the filter has a compartment (24) inside which a metal insert (20) designed to co-operate with the fixing element (7, 8) of the sensor is disposed, said insert constituting at least a part of the retaining element, and in which the metal element (18) has a window (26) disposed facing the compartment (24) through which at least a part (7) of the fixing element of the sensor is designed to extend.

3. Filter as claimed in claim 2, in which the fixing element has a thread (7) extending from an end (5a) of the sensor as far as a collar (8), the insert (20) having a complementary tapping thread (21) and being immobilised in the compartment (24) in rotation.

4. Filter as claimed in claim 2 or 3, in which the insert (20) is mounted so as to slide in the compartment (24) in a direction essentially perpendicular to the window (26) of the metal element and has an external face (20a) designed to move into contact with the periphery of said window (26) when the fixing element of the sensor (5) is co-operating with said insert (20).

5. Filter as claimed in claim 2 or 3, in which the metal insert (20) is immobilised in the compartment (24) and has an external face (20a) projecting out from the surface of the body (2) of the filter which is designed to move so that it bears against the periphery of the window (26).

6. Filter as claimed in any one of claims 2 to 5, in which the insert (20) has an external face incorporating a projection (34) designed to be inserted through the window (26) and being of a height at most equal to the thickness of the metal element (18).

7. Filter as claimed in any one of the preceding claims, in which the metal element (18) is a plate, preferably made from aluminium.

8. Filter as claimed in any one of the preceding claims, in which the body (2) of the filter has positioning lugs (35) and in which the metal element (18) has openings (36) designed to surround the positioning lugs.

9. Filter as claimed in any one of the preceding claims, in which a gasket (30) is disposed between the insert (20) and the compartment (24) of the body.

10. Filter as claimed in any one of the preceding claims, in which a gasket (38) is disposed around the compartment (24) between the body (2) of the filter and the metal element (18).

11. Filter as claimed in any one of claims 2 to 10, in which a duct (25) provides a communication between a fluid circuit (6) and the compartment (24) of the body, the sensor (5) having a zone (9) which is sensitive to the measured characteristic disposed in the compartment.

12. Filter as claimed in claim 11, in which the duct (25) is defined on the one hand by a portion of the compartment (24) opening into the external surface of the body (2) and on the other hand by the metal element (18).

13. Filter as claimed in any one of the preceding claims, in which the filtered fluid is lubricating oil and the sensor (.5) is a pressure sensor.

14. Filter as claimed in any one of the preceding claims, in which a heat exchanger (40) designed to cool the fluid is mounted on the metal element (18).

## Patentansprüche

1. Fluidfilter für ein Fahrzeug, umfassend:
- einen Körper (2), der zumindest teilweise aus Kunststoff hergestellt ist und eine Befestigungsbasis (3) aufweist, wobei die Befestigungsbasis eine erste Seite (3a), die dazu bestimmt ist, mit einem Element (12) des Fahrzeugs, das mit der Masse verbunden ist, in Kontakt zu kommen, eine zweite im Wesentlichen der ersten Seite gegenüber liegende Fläche (3b) und mindestens einen Durchgang (14) aufweist, der dazu bestimmt ist, von einem metallischen Element (15) zur Befestigung des Filters am Element des Fahrzeugs durchquert zu werden; und
einen elektrischen Fühler (5), der dazu bestimmt ist, einen Funktionsparameter des Filters zu messen, und der ein zumindest teilweise metallisches Befestigungselement (7, 8) aufweist, **dadurch gekennzeichnet, dass** er aufweist:
- ein metallisches Element (18), das gegenüber der zweiten Seite (3b) der Befestigungsbasis angeordnet ist und mindestens ein Öffnung (19) aufweist, die in Übereinstimmung mit dem Durchgang angeordnet ist, wobei die Öffnung (19) einen Umfang aufweist, an dem das Befestigungselement (15) des Filters zur Anlage gelangen soll; und
- ein Halteelement (20), das dazu ausgeführt ist, mit dem Befestigungselement (7, 8) des Fühlers zusammenzuwirken, und das dazu ausgeführt ist, das metallische Element (18) elektrisch mit dem Fühler (5) zu verbinden.

2. Filter nach Anspruch 1, bei dem der Körper (2) des Filters eine Lagerung (24) aufweist, in der ein metallischer Einsatz (20) angeordnet ist, der dazu ausgeführt ist, mit dem Befestigungselement (7, 8) des Fühlers zusammenzuwirken, wobei der Einsatz mindestens einen Teils des Halteelements bildet, und bei dem das metallische Element (18) ein Fenster (26) aufweist, das gegenüber der Lagerung (24) angeordnet und das derart ausgebildet, dass es von mindestens einem Teil (7) des Befestigungselements des Fühlers durchquert zu wird.

3. Filter nach Anspruch 2, bei dem das Befestigungselement ein Gewinde (7) umfasst, das sich von einem Ende (5a) bis zu einem Bund (8) erstreckt, wobei der Einsatz (20) ein komplementäres Gewinde (21) aufweist und in der Lagerung (24) drehfest angeordnet ist.

4. Filter nach Anspruch 2 oder 3, bei dem der Einsatz (20) gleitend in der Lagerung (24) entlang einer im Wesentlichen zum Fenster (26) des metallischen Elements senkrechten Richtung angeordnet ist und eine Außenseite (20a) aufweist, die dazu ausgeführt ist, am Umfang des Fensters (26) beim Zusammenwirken des Befestigungselements des Fühlers (5) mit dem Einsatz (20) zur Anlage zu gelangen.

5. Filter nach Anspruch 2 oder 3, bei dem der metallische Einsatz (20) in der Lagerung (24) festgestellt ist und eine Außenseite (20a) aufweist, die an der Oberfläche des Körpers (2) des Filters vorspringt, die dazu ausgeführt ist, am Umfang des Fensters (26) zur Anlage zu gelangen.

6. Filter nach einem der Ansprüche 2 bis 5, bei dem der Einsatz (20) eine Außenseite aufweist, die einen Vorsprung (34) umfasst, der dazu ausgeführt ist, in das Fenster (26) eingesetzt zu werden, und eine Höhe höchstens gleich der Dicke des metallischen Elements (18) aufweist.

7. Filter nach einem der vorhergehenden Ansprüche, bei dem das metallische Element (18) eine Platte vorzugsweise aus Aluminium aufweist.

8. Filter nach einem der vorhergehenden Ansprüche, bei dem der Körper (2) des Filters Positionierhaken (35) aufweist, und bei dem das metallische Element (18) Öffnungen (36) aufweist, die dazu ausgeführt sind, die Positionierhaken zu umschließen.

9. Filter nach einem der vorhergehenden Ansprüche, bei dem eine Dichtung (30) zwischen dem Einsatz (20) und der Lagerung (24) des Körpers angeordnet ist.

10. Filter nach einem der vorhergehenden Ansprüche, bei dem eine Dichtung (38) um die Lagerung (24) zwischen dem Körper (2) des Filters und dem metallischen Element (18) angeordnet ist.

11. Filter nach einem der Ansprüche 2 bis 10, bei dem eine Leitung (25) eine Verbindung zwischen einer Fluidschaltung (6) und der Lagerung (24) des Körpers sicherstellt, wobei der Fühler (5) eine für das gemessene Merkmal empfindliche Zone (9) aufweist, die in der Lagerung angeordnet ist.

12. Filter nach Anspruch 11, bei dem die Leitung (25) einerseits durch einen Abschnitt der Lagerung (24), der in die Außenseite des Körpers (2) mündet, und andererseits durch das metallische Element (18) bestimmt ist.

13. Filter nach einem der vorhergehenden Ansprüche, bei dem das gefilterte Fluid Schmleröl ist und der Fühler (5) ein Druckfühler ist.

14. Filter nach einem der vorhergehenden Ansprüche, bei dem ein Wärmetauscher (40), der zur Kühlung des Fluids bestimmt ist, auf dem metallischen Element (18) befestigt ist.
